# EUROPÄISCHE PATENTSCHRIFT

(11) **EP 1 693 243 B1**
(45) Veröffentlichungstag und Bekanntmachung des Hinweises auf die Patenterteilung: **11.07.2007**
(21) Anmeldenummer: 06003007.9
(22) Anmeldetag: 15.02.2006
(51) Int. Cl.: B60K 35/00

(54) **System und Verfahren zur Einstellung der Betriebsart von personalisierbaren Fahrzeugfunktionen**
System and method for adjusting personalizable vehicle functions
Système et procédé pour l'adaption des functions véhiculaires personalisables

(30) Priorität: 21.02.2005 DE 102005007865
(43) Veröffentlichungstag der Anmeldung: 23.08.2006
(73) Patentinhaber: GM Global Technology Operations, Inc., Detroit, MI 48265-3000 (US)
(72) Erfinder: Bolduan, Dirk, 64390 Erzhausen (DE); Tassotto, Mario, 65428 Rüsselsheim (DE)
(74) Vertreter: Daniel, Ulrich W.P.

(56) Entgegenhaltungen:
- EP-B- 0 119 350
- DE-A1- 10 026 382
- DE-A1- 19 961 619
- US-A1- 2002 054 159
- US-B1- 6 373 472

## Beschreibung

Die vorliegende Erfindung bezieht sich auf ein System und ein Verfahren zur Einstellung der Betriebsart von personalisierbaren Fahrzeugfunktionen in einem Fahrzeug.

Obwohl auf beliebige Informationssysteme und Funktionen anwendbar, werden die vorliegende Erfindung sowie die ihr zu Grunde liegende Problematik in Bezug auf ein an Bord eines Kraftfahrzeuges befindliches Informationssystem zur Anzeige von Informationen und in Bezug auf Fahrzeugfunktionen näher erläutert.

Aus dem Stand der Technik sind verschiedene personalisierbare Fahrzeugfunktionen in einem Kraftfahrzeug bekannt, wie beispielsweise die Kindersicherungsfunktion, die Fensterheberfunktion, die Zentralverriegelungsfunktion, die Beifahrer-Airbag-Funktion, oder dergleichen.

Diese Fahrzeugfunktionen kann der Fahrzeugbenutzer im Allgemeinen nach seinen kunden-spezifischen Wünschen ausgestalten, d. h. personalisieren. Beispielsweise kann der Kraftfahrzeugsbenutzer manuell einstellen, in wie fern der Beifahrer-Airbag aktiviert ist (vorzugsweise für den Fall, in welchem sich eine erwachsene Person auf dem Beifahrersitz befindet) oder nicht aktiviert ist (vorzugsweise für den Fall, in welchem sich ein Kleinkind oder ein Gegenstand auf dem Beifahrersitz befindet), in wie fern ein automatisches Verschließen der Türen ab einer definierten Geschwindigkeit erfolgen soll, oder dergleichen. Im Allgemeinen besitzt jede personalisierbare Fahrzeugfunktion einen eigenen Einstellmechanismus mit dazu gehöriger spezifischer Verfahrensanweisung.

An diesem Ansatz gemäß dem Stand der Technik hat sich jedoch die Tatsache als nachteilig herausgestellt, dass die unterschiedlichen personalisierbaren Fahrzeugfunktionen jeweils unterschiedliche Routinen bzw. Verfahrensanweisungen von dem Kraftfahrzeugbenutzer für eine Einstellung der jeweiligen Fahrzeugfunktion in Übereinstimmung mit den Kundenwünschen erfordern. Somit ist der Kraftfahrzeugbenutzer gezwungen, sich mit den einzelnen Routinen bzw. Verfahrensanweisungen der von ihm zu personalisierenden Kraftfahrzeugfunktionen vertraut zu machen. Dies ist mit einem erheblichen Zeitaufwand und erheblichen Mühen verbunden, so dass der Komfort für den Kraftfahrzeugsbenutzer zu wünschen übrig lässt.

Aus der US 6 373 472 B1 ist ein System mit den Merkmalen des Oberbegriffs des Patentanspruchs 1 bekannt; ein ähnliches System zeigt die US 2002/054159 A.

Es ist somit Aufgabe der vorliegenden Erfindung, ein System und ein Verfahren zu schaffen, mit welchen die Einstellung der Betriebsarten von personalisierbaren Fahrzeugfunktionen in einem Fahrzeug auf einfache und komfortable Weise durchführbar ist.

Erfindungsgemäß wird diese Aufgabe vorrichtungsseitig durch ein System mit den Merkmalen des Patentanspruchs 1 und verfahrensseitig durch ein Verfahren mit den Merkmalen des Patentanspruchs 5 gelöst.

Somit weist die vorliegende Erfindung gegenüber dem Stand der Technik den Vorteil auf, dass der Kraftfahrzeugbenutzer sich lediglich mit einem einheitlichen Einstellsystem vertraut machen muss, um alle personalisierbaren Fahrzeugfunktionen in dem Fahrzeug personenspezifisch einstellen zu können. Die einheitliche Verfahrensanweisung gewährleistet ein einfaches, sicheres, schnelles und komfortables Einstellen der jeweiligen personalisierbaren Fahrzeugfunktionen durch den Kraftfahrzeugbenutzer.

Durch jede 7-Segement-Ziffer des Wegstreckenzählers können vorbestimmte Buchstaben generiert und dargestellt werden, welche eine gut ablesbare Menüführung bei der Einstellung der personalisierbaren Funktionen gewährleistet.

In den Unteransprüchen finden sich vorteilhafte Ausgestaltungen und Verbesserungen des im Anspruch 1 angegebenen Systems sowie des im Anspruch 5 angegebenen Verfahrens.

Gemäß einer bevorzugten Weiterbildung ist die gemeinsame Eingabeeinrichtung als mindestens ein Lenkstockhebel ausgebildet. Dadurch kann der Fahrzeugbenutzer mittels beispielsweise Drücken oder Ziehen bzw. mittels nach oben oder nach unten Bewegen eines oder beider Lenkstockhebel die einzelnen Menüebenen des Systems durchlaufen, die gewünschte personalisierbare Fahrzeugfunktion auswählen und die Betriebsart derselben entsprechend seiner Vorstellung aktivieren. Eine Ausübung der Einstellung ist selbstverständlich vor, während und nach einer Fahrt möglich.

Gemäß einem weiteren bevorzugten Ausführungsbeispiel sind den einzelnen personalisierbaren Fahrzeugfunktionen bzw. den einzelnen Betriebsarten der jeweiligen personlasierbaren Fahrzeugfunktionen nach einem vorbestimmten Muster vorbestimmte Menüauswahlobjekte zugeordnet, welche beispielsweise in der Bedienungsanleitung erklärt sind. Somit kann in der Anzeigeeinrichtung lediglich das zugeordnete Menüauswahlobjekt dargestellt werden, so dass der Kraftfahrzeugbenutzer schnell das dargestellte Menüauswahlobjekt der jeweiligen personalisierbaren Fahrzeugfunktion zuordnen und die gewünschte Betriebsart derselben entsprechend einstellen kann.

Vorzugsweise ist der Wegstreckenzähler nach Beendigung der personalisierten Einstellung auf den eigentlich Zählerstand zurückschaltbar. Dadurch kann als Anzeigeeinrichtung der bereits in dem Kraftfahrzeug existierende Wegstreckenzähler mit einer Doppelfunktion belegt werden, so dass für die einheitliche Verfahrensanweisung auf in dem Kraftfahrzeug bereits existierende Einrichtungen zurückgriffen werden kann. Dadurch entsteht ein kostengünstiges und einfach nachrüstbares System. Gemäß einem weiteren bevorzugten Ausführungsbeispiel wird dem Kraftfahrzeugbenutzer der Beginn und/oder die Beendigung der Einstellung der Betriebsarten der personalisierbaren Fahrzeugfunktionen mit einem akustischen, visuellen und/oder haptischen Signal signalisiert. Vorteilhaft wird dem Kraftfahrzeugbenutzer auch das Aufrufen, Auswählen und/oder Aktivieren der jeweiligen Menüauswahlobjekte durch ein akustisches, visuelles und/oder haptisches Signal signalisiert. Dadurch ist der Kraftfahrzeugbenutzer jederzeit bestens darüber informiert, ob er sich in dem Kilometerstand-Anzeigemodus oder in dem Personalisierungsmodus befindet.

Nach einem weiteren bevorzugten Ausführungsbeispiel wird die personalisierte Einstellung nach Beendigung der Einstellung in einer zugeordneten Speichereinrichtung abgespeichert. Vorteilhaft wird die personalisierte Einstellung für einen sich in dem Zündschloss des Kraftfahrzeugs befindlichen Zündschlüssel abgespeichert und der Kennung dieses Schlüssels zugeordnet. Somit kann jeder Fahrzeugschlüssel eine unterschiedliche Programmierung und somit unterschiedliche personalisierte Einstellungen aufweisen, welche automatisch bei Inbetriebnahme des Kraftfahrzeuges durch eine zentrale Steuereinheit abgerufen werden.

Die Erfindung wird im Folgenden anhand von Ausführungsbeispielen unter Bezugnahme auf die beiliegenden Figuren der Zeichnung näher erläutert. Von den Figuren zeigen:
- Fig. 1: eine gemeinsame Anzeigeeinrichtung gemäß einem bevorzugten Ausführungsbeispiel der vorliegenden Erfindung;
- Fig. 2: die schematische Darstellung einer deaktivierten Fahrzeugfunktion P1 gemäß einem Ausführungsbeispiel der vorliegenden Erfindung;
- Fig. 3: die schematische Darstellung einer aktivierten Fahrzeugfunktion P1 gemäß einem Ausführungsbeispiel der vorliegenden Erfindung.

In den Figuren bezeichnen gleiche Bezugszeichen gleiche oder funktionsgleiche Komponenten, soweit nichts Gegenteiliges angegeben ist.

Obwohl die vorliegende Erfindung auf jegliche personalisierbare Funktionen insbesondere eines Fahrzeugs anwendbar ist, wird der vorliegenden Erfindungsgedanke rein exemplarisch anhand der Beifahrer-Airbagfunktion näher erläutert. Dabei kann der Fahrzeugbenutzer vorteilhaft benutzerspezifisch auswählen, ob der Beifahrerairbag deaktiviert (OFF) oder aktiviert (On) ist.

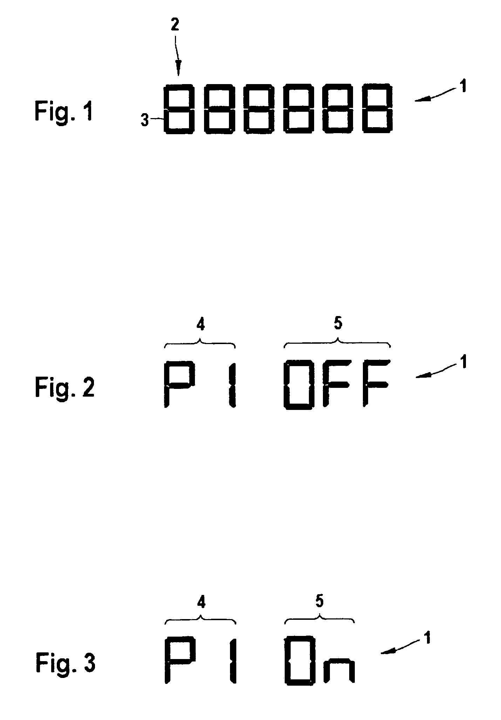

Als gemeinsame Anzeigeeinrichtung für den Kraftfahrzeugbenutzer wird beispielsweise der in Figur 1 dargestellte, im Allgemeinen bereits in einem Kraftfahrzeug existierende Wegstreckenzähler 1 verwendet, welcher beispielsweise aus mehreren nebeneinander angeordneten 7-Segment-Ziffern 2 besteht. Die 7-Segment-Ziffern 2 sind jeweils aus 7 einzelnen Segmenten 3 aufgebaut, wie in Figur 1 ersichtlich ist.

Als gemeinsame Eingabeeinrichtung können beispielsweise ein oder beide Lenkstockhebel (nicht dargestellt) verwendet werden, welche im Allgemeinen an der Lenksäule des Kraftfahrzeuglenkrads verschwenkbar montiert sind. Durch eine bestimmte Bewegung eines oder beider Lenkstockhebel, beispielsweise durch gleichzeitiges Ziehen oder Drücken beider Lenkstockhebel, kann der Start der Personalisierung erfolgen, indem der Wegstreckenzähler 1 von seinem Kilometerstand-Anzeigezustand in einen Personalisierungsbetrieb umgeschaltet wird, wie in den Figuren 2 und 3 dargestellt ist.

Vorzugsweise wird jeder personalisierbaren Fahrzeugfunktion ein vorbestimmtes Menüauswahlobjekt 4 zugeordnet. Gemäß dem vorliegenden Ausführungsbeispiel wird beispielsweise P1 der Fahrzeugfunktion "Beifahrerairbag", das Menüauswahlobjekt P2 der Funktion "Zentralverriegelung", usw. zugeordnet.

Ferner, wie ebenfalls in den Figuren 2 und 3 illustriert ist, ist die jeweilige Betriebsart der einzelnen Fahrzeugfunktionen ebenfalls vorbestimmten Menüauswahlobjekten 5 zugeordnet. Das Menüauswahlobjekt 5 "OFF" ist beispielsweise dem Betriebszustand des Beifahrerairbags zugeordnet, in welchem dieser deaktiviert ist und das Menüauswahlobjekt 5 "On" ist beispielsweise dem Betriebszustand des Beifahrerairbags zugeordnet, in welchem dieser aktiviert ist.

Die möglichen Personalisierungsfunktionen bzw. Betriebsarten mit zugeordneten Menüauswahlobjekten 4 bzw. 5 sind beispielsweise in der Bedienungsanleitung übersichtlich aufgelistet, so dass der Kraftfahrzeugsbenutzer die auf dem Wegstreckenzähler 1 dargestellten Menüauswahlobjekte 4, 5 eindeutig den entsprechenden Fahrzeugfunktionen bzw. den diesen zugeordneten Betriebsarten auf einfache Weise zuordnen kann.

Anhand der Figuren 2 und 3 wird im Folgenden ein Beispiel näher erläutert. Das Menüauswahlobjekt P1 illustriert beispielsweise, dass der dem Menüauswahlobjekt 4 zugeordnete Beifahrerairbag als Fahrzeugfunktion für eine personalisierte Einstellung ausgewählt ist. Das Menüauswahlobjekt "OFF" ist beispielsweise dem Betriebszustand des Beifahrerairbags zugeordnet, in welchem dieser deaktiviert ist. Wünscht der Kraftfahrzeugsbenutzer hingegen eine Aktivierung des Beifahrerairbags, so kann er mittels der gemeinsamen Eingabeeinrichtung, d. h. beispielsweise durch nach unten oder nach oben Drücken eines Lenkstockhebels, die Betriebsart des Beifahrerairbags von dem Zustand "OFF" (in Figur 2 dargestellt) in den Betriebszustand "On" (in Figur 3 dargestellt) umschalten. Das Menüauswahlobjekt "On" ist dabei dem aktivierten Betriebszustand des Beifahrerairbags zugeordnet.

Nach Beendigung der Personalisierung wird die Anzeigeeinrichtung 1 auf den letzten Zählerstand bzw. den augenblicklich vorherrschenden Zählerstand zurückgeschaltet, beispielsweise mittels gleichzeitig Ziehen oder Drücken beider Lenkstockhebel.

Auf die oben erläuterte Art und Weise kann der Kraftfahrzeugbenutzer sämtliche personalisierbare Fahrzeugfunktionen mittels einer einheitlichen Verfahrenanweisung und einer gemeinsamen Anzeige- sowie Eingabeeinrichtung entsprechend seinen Vorstellungen einstellen. Dabei muss er sich lediglich mit einem einheitlichen Einstellmechanismus und einem einheitlichen Einstellverfahren vertraut machen, so dass ein schnelles und einfaches Einstellen der personalisierbaren Fahrzeugfunktionen gewährleistet wird. Es wird eine einheitliche Prozedur zur Einstellung aller Personalisierungsfunktionen und somit eine leicht verständliche Routine für den Kraftfahrzeugbenutzer vorgegeben, wobei unterschiedliche Kraftfahrzeugbenutzer eigene personalisierte Einstellungen vornehmen können, welche durch das System automatisch abrufbar sind.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielsweise kann der Beginn und die Beendigung der personalisierten Einstellung mit einem akustischen Signal kombiniert werden, d.h. der Kraftfahrzeugbenutzer wird durch ein akustisches Signal darüber informiert, dass er sich entweder in dem Kilometerstand-Anzeigemodus oder in dem Personalisierungsmodus befindet. Selbstverständlich kann auch die Auswahl eines Menüauswahlobjektes bzw. einer Betriebsart der personalisierbaren Fahrzeugfunktion durch ein akustisches Signal dem Kraftfahrzeugbenutzer angezeigt werden.

Bei mehreren Kraftfahrzeugbenutzern kann es vorteilhaft sein, die personalisierten Einstellungen für die jeweiligen Zündschlüssel abzuspeichern, vorzugsweise in einer kraftfahrzeugseitigen Speichereinrichtung, wobei die abgespeicherte personalisierte Einstellung der Kennung des zugeordneten Zündschlüssels zugeordnet wird. Somit ruft die zentrale Steuereinheit des Kraftfahrzeuges bei einem Einstecken des Zündschlüssels in das Zündschloss die jeweils gespeicherten personalisierten Einstellungen ab und stellt die entsprechenden zugeordneten personalisierbaren Fahrzeugfunktionen entsprechend den Vorgaben automatisch ein.

Alternativ zum oben dargestellten Ausführungsbeispiel kann bestimmten Fahrzeugfunktionen anstatt von Wörtern "On" und "OFF" auch Zahlen und dergleichen zugeordnet werden. Beispielsweise kann eine "0" eine Deaktivierung des Beifahrerairbags und eine "1" eine Aktivierung des Beifahrerairbags signalisieren.

Als weiteres Beispiel wird die Fahrzeugfunktion "Winterreifen-Warnfunktion" angegeben. Hierbei ist der Fahrzeugfunktion "Winterreifen-Warnfunktion" beispielsweise das Menüauswahlobjekt P6 zugeordnet, wobei der Kraftfahrzeugbenutzer bei einer Auswahl des Menüauswahlobjektes P6 in die darunterliegende Menüebene gelangt, welche beispielsweise die Menüauswahlobjekte "160", "190" und "210" aufweist. Diese einzelnen Zahlen geben die bei einem Gebrauch von Winterreifen erlaubte Höchstgeschwindigkeit an, so dass der Kraftfahrzeugbenutzer entsprechend den verwendeten Winterreifen das Menüauswahlobjekt auswählt und aktiviert, welches die den verwendeten Winterreifen zugeordnete Höchstgeschwindigkeit angibt. Beträgt die erlaubte Höchstgeschwindigkeit beispielsweise 160 km/h, so wählt der Kraftfahrzeugbenutzer das Menüauswahlobjekt "P6 160" aus, wobei das System vorzugsweise den Kraftfahrzeugbenutzer bei einem Überschreiten dieser erlaubten Höchstgeschwindigkeit durch beispielsweise ein akustisches Signal warnt.

Es ist für einen Fachmann offensichtlich, dass den verschiedensten Betriebsarten der Fahrzeugfunktionen bzw. den verschiedensten Fahrzeugfunktionen die unterschiedlichsten Menüauswahlobjekte zugeordnet werden können, und dass verschiedene Menüebenen mit einer geeigneten Anzahl an Menüobjekten möglich sind.

### Bezugszeichenliste

- 1: Wegstreckenzähler
- 2: 7-Segment-Ziffer
- 3: Segment
- 4: Menüauswahlobjekt Fahrzeugfunktion
- 5: Menüauswahlobjekt Betriebsart

## Patentansprüche

1. System zur Einstellung der Betriebsart von personalisierbaren Fahrzeugfunktionen in einem Fahrzeug mit:
einer Anzeigeeinrichtung (1) zum Darstellen von den Betriebsarten der jeweiligen personalisierbaren Fahrzeugfunktionen zugeordneten Menüauswahlobjekten (4, 5); und mit
einer Eingabeeinrichtung zum Aufrufen, Auswählen und/oder Aktivieren der jeweiligen Menüauswahlobjekte (4, 5); wobei
die Betriebsarten der in dem Fahrzeug existierenden personalisierbaren Fahrzeugfunktionen mittels einer einheitlichen Verfahrensanweisung unter Verwendung der Eingabeeinrichtung und der Anzeigeeinrichtung (1) einstellbar sind, **dadurch gekennzeichnet, dass** die Anzeigeeinrichtung durch einen Wegstreckenzähler gebildet ist, dessen einzelne Ziffern (2) als 7-Segment-Ziffern ausgebildet sind.

2. System nach Anspruch 1, **dadurch gekennzeichnet, dass** die Eingabeeinrichtung als mindestens ein Lenkstockhebel ausgebildet ist.

3. System nach Anspruch 1 oder 2, **dadurch gekennzeichnet, dass** den einzelnen personalisierbaren Fahrzeugfunktionen bzw. den entsprechenden Betriebsarten derselben nach einem vorbestimmten Muster vorbestimmte Menüauswahlobjekte (4, 5) zugeordnet sind, welche beispielsweise in der Bedienungsanleitung erklärt sind.

4. System nach wenigstens einem der vorgehenden Ansprüche, **dadurch gekennzeichnet, dass** der Wegstreckenzähler (1) nach Beendigung der personalisierten Einstellung auf den eigentlichen Zählerstand zurückschaltbar ist.

5. Verfahren zur Einstellung der Betriebsart von personalisierbaren Fahrzeugfunktionen in einem Fahrzeug mit folgenden Verfahrensschritten:
Darstellen von den Betriebsarten der jeweiligen personalisierbaren Fahrzeugfunktionen zugeordneten Menüauswahlobjekten (5) auf einem Wegstreckenzähler (1), dessen einzelne Ziffern (2) als 7-Segment-Ziffern ausgebildet werden;
Aufrufen, Auswählen und/oder Aktivieren der jeweiligen Menüauswahlobjekte (4, 5) mittels einer Eingabeeinrichtung; und
Einstellen der Betriebsarten der in dem Fahrzeug existierenden personalisierbaren Fahrzeugfunktionen mittels einer einheitlichen Verfahrensanweisung unter Verwendung der Anzeigeeinrichtung (1) und der Eingabeeinrichtung.

6. Verfahren nach Anspruch 5, **dadurch gekennzeichnet, dass** den einzelnen personalisierbaren Fahrzeugfunktionen bzw. den entsprechenden Betriebsarten derselben nach einem vorbestimmten Muster vorbestimmte Menüauswahlobjekte (4, 5) zugeordnet werden, welche beispielsweise in der Bedienungsanleitung erklärt werden.

7. Verfahren nach Anspruch 5 oder 6, **dadurch gekennzeichnet, dass** der Wegstreckenzähler (1) nach Beendigung der personalisierten Einstellung auf den eigentlichen Zählerstand zurückgeschaltet wird.

8. Verfahren nach wenigstens einem der Ansprüche 5 bis 7, **dadurch gekennzeichnet, dass** der Beginn und/oder die Beendigung der personalisierten Einstellungen dem Kraftfahrzeugbenutzer durch ein akustisches, visuelles und/oder haptisches Signal signalisiert wird.

9. Verfahren nach wenigstens einem der Ansprüche 5 bis 8, **dadurch gekennzeichnet, dass** das Aufrufen, Auswählen und/oder Aktivieren der jeweiligen Menüauswahlobjekte (4, 5) dem Kraftfahrzeugbenutzer durch ein akustisches, visuelles und/oder haptisches Signal signalisiert wird.

10. Verfahren nach wenigstens einem der Ansprüche 5 bis 9, **dadurch gekennzeichnet, dass** die personalisierte Einstellung der Betriebsart von personalisierbaren Fahrzeugfunktionen nach Beendigung der personalisierten Einstellung in einer Speichereinrichtung abgespeichert wird, beispielsweise für einen sich in dem Zündschloss des Kraftfahrzeuges befindlichen Zündschlüssel.

## Claims

1. System for setting the operating mode of personalisable vehicle functions in a vehicle with:
a display device (1) for representing menu selection objects (4, 5) which are associated with the operating modes of the respective personalisable vehicle functions; and with
an input device for calling up, selecting and/or activating the respective menu selection objects (4, 5); wherein
the operating modes of the personalisable vehicle functions which are present in the vehicle can be set by means of standard procedural instructions using the input device and the display device (1),
**characterised in**
**that** the display device is constituted by an odometer the individual figures (2) of which are formed as 7-segment figures.

2. System according to Claim 1, **characterised in that** the input device is formed as at least one steering column lever.

3. System according to Claim 1 or 2, **characterised in that** menu selection objects (4, 5) which are predetermined according to a predetermined pattern and are explained, for example, in the operating instructions are associated with the individual personalisable vehicle functions or the corresponding operating modes thereof.

4. System according to at least one of the preceding Claims, **characterised in that** the odometer (1) can be switched back to the actual counter reading following the completion of the personalised setting.

5. Method for setting the operating mode of personalisable vehicle functions in a vehicle comprising the following method steps:
representing menu selection objects (5) associated with the operating modes of the respective personalisable vehicle functions on an odometer (1), the individual figures (2) of which are formed as 7-segment figures;
calling up, selecting and/or activating the respective menu selection objects (4, 5) by means of an input device; and
setting the operating modes of the personalisable vehicle functions present in the vehicle by means of standard procedural instruction using the display device (1) and the input device.

6. Method according to Claim 5, **characterised in that**
menu selection objects (4, 5) which are predetermined according to a predetermined pattern and are explained, for example, in the operating instructions are associated with the individual personalisable vehicle functions or the corresponding operating modes thereof.

7. Method according to Claim 5 or 6, **characterised in that** the odometer (1) is switched back to the actual counter reading following the completion of the personalised setting.

8. Method according to at least one of Claims 5 to 7, **characterised in that** the beginning and/or the completion of the personalised settings are/is indicated to the motor vehicle user through an acoustic, a visual and/or a haptic signal.

9. Method according to at least one of Claims 5 to 8, **characterised in that** the calling up, selection and/or activation of the respective menu selection objects (4, 5) are/is indicated to the motor vehicle user through an acoustic, a visual and/or a haptic signal.

10. Method according to at least one of Claims 5 to 9, **characterised in that** the personalised setting of the operating mode of personalisable vehicle functions is stored in a memory device following the completion of the personalised setting, for example for an ignition key located in the ignition lock of the motor vehicle.

## Revendications

1. Système de réglage du mode de fonctionnement de fonctions véhiculaires personnalisables dans un véhicule comportant :
- un dispositif d'affichage (1) permettant de représenter les modes de fonctionnement de chaque rubrique de menu (4; 5) associée aux fonctions véhiculaires personnalisables et
- un dispositif de saisie servant à appeler, sélectionner et/ou activer la rubrique de menu respective (4, 5) ;
- les modes de fonctionnement des fonctions véhiculaires personnalisables existant dans le véhicule pouvant être réglés à l'aide d'une procédure uniforme en utilisant le dispositif de saisie et le dispositif d'affichage (1), **caractérisé en ce que** le dispositif d'affichage se compose d'un compteur kilométrique, dont chaque chiffre (2) est conçu comme un chiffre à 7 segments.

2. Système selon la revendication 1, **caractérisé en ce que** le dispositif de saisie est réalisé sous forme d'au moins un levier de direction.

3. Système selon la revendication 1 ou 2, **caractérisé en ce que** des rubriques prédéfinies (4, 5) sont associées selon un modèle prédéfini à la fonction véhiculaire personnalisable respective et/ou aux modes de fonctionnement correspondants de ces dernières, lesquelles rubriques sont expliquées par exemple dans le mode d'emploi.

4. Système selon au moins l'une quelconque des revendications précédentes, **caractérisé en ce que** le compteur kilométrique (1) peut réafficher la position réelle du compteur à la fin du réglage personnalisé.

5. Procédé de réglage du mode de fonctionnement de fonctions véhiculaires personnalisables dans un véhicule comportant les étapes suivantes :
- représentation des modes de fonctionnement de chaque rubrique de menu (5) associée aux fonctions véhiculaires personnalisables sur un compteur kilométrique (1) dont chaque chiffre (2) est formé de chiffres à 7 segments ;
- appel, sélection et/ou activation des rubriques (4, 5) respectives à l'aide d'un dispositif de saisie ; et
- réglage des modes de fonctionnement des fonctions véhiculaires personnalisables existant dans le véhicule à l'aide d'une procédure uniforme en utilisant le dispositif d'affichage (1) et le dispositif de saisie.

6. Procédé selon la revendication 5, **caractérisé en ce que** des rubriques (4, 5) prédéfinies sont associées selon un modèle prédéfini à chaque fonction véhiculaire personnalisable et/ou aux modes de fonctionnement correspondants de ces dernières, lesquelles rubriques sont par exemple expliquées dans le mode d'emploi.

7. Procédé selon la revendication 5 ou 6, **caractérisé en ce que** le compteur kilométrique (1) peut réafficher la position réelle du compteur à la fin du réglage personnalisé.

8. Procédé selon au moins l'une quelconque des revendications 5 à 7, **caractérisé en ce que** le début et/ou la fin des réglages personnalisés est signalé à l'utilisateur du véhicule automobile par un signal acoustique, visuel et/ou tactile.

9. Procédé selon au moins l'une quelconque des revendications 5 à 8, **caractérisé en ce que** l'appel, la sélection et/ou l'activation des rubriques (4, 5) respectives est signalé à l'utilisateur du véhicule automobile par un signal acoustique, visuel et/ou tactile.

10. Procédé selon au moins l'une quelconque des revendications 5 à 9, **caractérisé en ce que** le réglage personnalisé du mode de fonctionnement de fonctions véhiculaires personnalisables est enregistré à la fin du réglage personnalisé dans le dispositif d'enregistrement, par exemple pour une clé de contact se trouvant dans la serrure de contact du véhicule.
